# EUROPÄISCHE PATENTSCHRIFT

(11) **EP 2 326 809 B1**
(45) Veröffentlichungstag und Bekanntmachung des Hinweises auf die Patenterteilung: **04.07.2012**
(21) Anmeldenummer: 09778342.7
(22) Anmeldetag: 04.09.2009
(51) Int. Cl.: F01N 11/00, F01N 3/20

(54) **VERFAHREN ZUM BETREIBEN EINER ABGASREINIGUNGSANLAGE MIT EINEM SCR-KATALYSATOR UND EINEM VORGESCHALTETEN OXIDATIONSKATALYTISCH WIRKSAMEN ABGASREINIGUNGSBAUTEIL**
METHOD FOR OPERATING AN EXHAUST EMISSION CONTROL SYSTEM HAVING A SCR-CATALYST AND AN UPSTREAM OXIDATION CATALYST EXHAUST EMISSION CONTROL COMPONENT
PROCÉDÉ D'UTILISATION D'UN DISPOSITIF DE TRAITEMENT DES GAZ D'ÉCHAPPEMENT COMPORTANT UN CATALYSEUR À RÉDUCTION CATALYTIQUE SÉLECTIVE ET UN COMPOSANT DE TRAITEMENT DES GAZ D'ÉCHAPPEMENT À ACTIVITÉ CATALYTIQUE D'OXYDATION MONTÉ EN AMONT

(30) Priorität: 26.09.2008 DE 102008049098
(43) Veröffentlichungstag der Anmeldung: 01.06.2011
(73) Patentinhaber: Daimler AG, 70327 Stuttgart (DE)
(72) Erfinder: MASSNER, Alexander, 73730 Esslingen (DE)
(74) Vertreter: JENSEN & SON
(86) Internationale Anmeldenummer: PCT/EP2009/006437
(87) Internationale Veröffentlichungsnummer: WO 2010/034403

(56) Entgegenhaltungen:
- EP-A1- 1 136 671
- WO-A2-2008/002907
- DE-A1- 19 732 167
- JP-A- 10 259 714

## Beschreibung

Die Erfindung betrifft ein Verfahren zum Betreiben einer Abgasreinigungsanlage einer Kraftfahrzeug-Brennkraftmaschine, in deren Abgasstrang ein oxidationskatalytisch wirksames Abgasreinigungsbauteil stromauf eines SCR-Katalysators angeordnet ist, wobei ein Alterungszustand des oxidationskatalytisch wirksamen Abgasreinigungsbauteils ermittelt wird.

Der Einsatz eines oxidationskatalytisch wirksamen Abgasreinigungsbauteils in Abgasreinigungsanlagen von Kraftfahrzeugen mit Verbrennungsmotor ist eine übliche Maßnahme zur Verringerung von schädlichen Abgasemissionen. Dabei ist die Kenntnis des Alterungszustands des oxidationskatalytisch wirksamen Abgasreinigungsbauteils insbesondere bei Anwesenheit weiterer, nachgeschalteter Abgasreinigungsbauteile von Bedeutung. Bei einem alterungsbedingten Nachlassen der katalytischen Reinigungsfähigkeit des oxidationskatalytisch wirksamen Abgasreinigungsbauteils kann der Betrieb der Abgasreinigungsanlage entsprechend angepasst werden oder es kann auf einen erforderlichen Wechsel aufmerksam gemacht werden.

Aus der DE 197 32 167 A1 ist ein Verfahren zur Ermittlung des Alterungszustands eines oxidationskatalytisch wirksamen Abgasreinigungsbauteils bekannt, bei welchem eine Abgasreinigungscharakteristik des Abgasreinigungsbauteils ermittelt und mit einer Referenzcharakteristik verglichen wird. Insbesondere wird eine Alterung diagnostiziert, wenn sich in einem Anstiegsabschnitt unzulässige Abweichungen von der Referenzcharakteristik ergeben.

Nachteilig bei diesem Verfahren ist das Erfordernis, eine entsprechende Sensorik zur Ermittlung der Abgasreinigungscharakteristik bereitstellen zu müssen.

Aufgabe der Erfindung ist es, ein Verfahren zum Betreiben einer Abgasreinigungsanlage mit einem oxidationskatalytisch wirksamen Abgasreinigungsbauteil und einem nachgeschalteten SCR-Katalysator anzugeben, bei welchem apparativ wenig aufwändig ein Alterungszustand des oxidationskatalytisch wirksamen Abgasreinigungsbauteils ermittelbar ist.

Diese Aufgabe wird durch ein Verfahren mit den Merkmalen des Anspruchs 1 gelöst.

Charakteristischerweise wird bei dem erfindungsgemäßen Verfahren durch Korrelation eines stromauf des oxidationskatalytisch wirksamen Abgasreinigungsbauteils im Abgas vorhandenen Kohlenwasserstoffanteils mit einem gleichzeitig vorhandenen Stickoxidumsatz des SCR-Katalysators der Alterungszustand des oxidationskatalytisch wirksamen Abgasreinigungsbauteils ermittelt.

Die Erfindung nutzt die überraschende Erkenntnis, dass ein durch den SCR-Katalysator erzielbarer Umsatz von Stickoxiden (NOx) zu Stickstoff (N₂) zumindest bei bestimmten Betriebsbedingungen vom Alterungszustand des vorgeschalteten oxidationskatalytisch wirksamen Abgasreinigungsbauteils abhängt. Der Grund liegt in der Fähigkeit des oxidationskatalytisch wirksamen Abgasreinigungsbauteils, die Abgaszusammensetzung durch Oxidation von oxidierbaren Abgasbestandteilen wie Stickstoffmonoxid (NO), Wasserstoff (H₂), Kohlenmonoxid (CO) und/oder Kohlenwasserstoffen (HC) verändern zu können. Eine Veränderung der Abgaszusammensetzung, insbesondere eine durch das oxidationskatalytisch wirksame Abgasreinigungsbauteil bewirkte Erhöhung des Anteils von Stickstoffdioxid (NO₂), hat wiederum Rückwirkung auf den erzielbaren NOx-Umsatz des SCR-Katalysators. Die Fähigkeit zur Veränderung der Abgaszusammensetzung ist jedoch bei zunehmender Alterung des oxidationskatalytisch wirksamen Abgasreinigungsbauteils vermindert. Erfindungsgemäß werden HC als Testssubstanz zur Prüfung auf die Fähigkeit des oxidationskatalytisch wirksamen Abgasreinigungsbauteils zur Veränderung der Abgaszusammensetzung und damit zur Beeinflussung der NOx-Umsatzfähigkeit des SCR-Katalysators herangezogen und es erfolgt durch eine Korrelation des stromauf des oxidationskatalytisch wirksamen Abgasreinigungsbauteils im Abgas vorhandenen HC-Anteils mit dem gleichzeitig vorhandenen NOx-Umsatz des SCR-Katalysators eine Ermittlung des Alterungszustands des oxidationskatalytisch wirksamen Abgasreinigungsbauteils.

Generell ist unter einem oxidationskatalytisch wirksamen Abgasreinigungsbauteil jedes einer Abgasreinigung dienende Bauteil zu verstehen, welches zumindest eine Oxidation von NO unterstützt. Bei dem oxidationskatalytisch wirksamen Abgasreinigungsbauteil kann es sich beispielsweise um einen Oxidationskatalysator oder um einen Partikelfilter mit einer oxidationskatalytisch wirksamen Beschichtung oder um eine Kombination der genannten Bauteile handeln. Unter einem SCR-Katalysator wird wie üblich ein Katalysator verstanden, welcher eine Reduktion von NOx unter oxidierenden Bedingungen, insbesondere mittels Ammoniak (NH₃) als selektivem Reduktionsmittel, katalysieren kann. Typischerweise handelt es sich um einen insbesondere eisenhaltigen zeolithischen SCR-Katalysator.

In Ausgestaltung des erfindungsgemäßen Verfahrens werden unterschiedliche HC-Anteile im Abgas stromauf des oxidationskatalytisch wirksamen Abgasreinigungsbauteils eingestellt und ein einem Unterschreiten eines vorgebbaren NOx-Umsatzes zugeordneter HC-Anteil wird als Grundlage für die Ermittlung des Alterungszustands herangezogen. Durch eine Variation des HC-Anteils kann genauer ermittelt werden, ob und inwieweit der HC-Anteil stromauf des oxidationskatalytisch wirksamen Abgasreinigungsbauteils eine Veränderung der Abgaszusammensetzung und insbesondere den NO₂-Gehalt stromab des oxidationswirksamen Abgasreinigungsbauteils beeinflusst und inwieweit der NOx-Umsatz des SCR-Katalysators beeinflusst wird. Durch Korrelation von NOx-Umsatz und HC-Gehalt kann daraus auf den Alterungszustand geschlossen werden. Dabei wird bevorzugt ein Vergleich mit Referenzwerten durchgeführt, welche vorab empirisch ermittelt wurden und die beispielsweise als Alterungskennlinie zur Verfügung stehen. Die HC können als unverbrannte oder teilverbrannte Kraftstoffbestandteile im Abgas vorliegen und beispielsweise durch motorische Nacheinspritzung und/oder durch eine von außen bewirkte Sekundäreinspritzung von Kraftstoff ins Abgas eingebracht werden. Es konnte festgestellt werden, dass insbesondere der Betrag des HC-Gehalts, bei welchem ein typischerweise vorhandener NOx-Maximalumsatz des SCR-Katalysators unterschritten wird, ein zuverlässiges Maß für den Alterungszustand des oxidationskatalytisch wirksamen Abgasreinigungsbauteils darstellt und diesen daher besonders zuverlässig charakterisiert.

In weiterer Ausgestaltung des Verfahrens erfolgt die Einstellung unterschiedlicher HC-Anteile im Abgas bei einem Betriebspunkt mit einer Temperatur des oxidationskatalytisch wirksamen Abgasreinigungsbauteils, bei dem eine vom oxidationskatalytisch wirksamen Abgasreinigungsbauteil im Frischzustand katalysierte Oxidation von NO zu NO₂ zumindest annähernd maximal ist. Ein bevorzugter Betriebspunkt ist durch Temperaturen von etwa 200°C bis 250 °C, Raumgeschwindigkeiten des Abgases von etwa 50000 1/h und Sauerstoffgehalten im Abgas von 2% bis 15 % gekennzeichnet. Eine alterungsbedingt verminderte HC-Umsetzung des oxidationskatalytisch wirksamen Abgasreinigungsbauteils verstärkt eine typischerweise vorhandene, durch HC bewirkte Inhibierung der NO₂-Bildung, welche sich insbesondere bei einem Betriebspunkt bemerkbar macht, bei welchem die NO₂-Bildung eines nicht gealterten oxidationskatalytisch wirksamen Abgasreinigungsbauteil annähernd maximal ist. Bei verminderter NO₂-Bildung ist jedoch typischerweise der NOx-Umsatz des stromab angeordneten SCR-Katalysators vermindert. Deshalb kann mit der erfindungsgemäßen Verfahrensführung der Alterungszustand des oxidationskatalytisch wirksamen Abgasreinigungsbauteils besonders zuverlässig durch Korrelation von HC-Gehalt und NOx-Umsatz ermittelt werden.

In weiterer Ausgestaltung des Verfahrens erfolgt die Einstellung unterschiedlicher HC-Anteile im Abgas bei einem Betriebspunkt mit einer Temperatur des SCR-Katalysators im Bereich zwischen 180 °C und 350 °C. In diesem Temperaturbereich ist eine vergleichsweise starke Abhängigkeit des NOx-Umsatzvermögens des SCR-Katalysators vom NO₂-Gehalt bzw. vom Verhältnis von NO₂ zu NOx des Abgases gegeben, wobei andererseits das oxidationskatalytisch wirksame Abgasreinigungsbauteil alterungsabhängig und in Abhängigkeit vom HC-Gehalt des Abgases mehr oder weniger effektiv NO zu NO₂ oxidieren kann. Im Bereich zwischen 180 °C und 350 °C, und insbesondere bei etwa 200 °C. ist daher für gebräuchliche SCR-Katalysatoren eine besonders zuverlässige Bestimmung des Alterungszustands durch Korrelation von HC-Gehalt und NOx-Umsatz ermöglicht. Bevorzugt ist ein Betriebspunkt mit einer Abgasraumgeschwindigkeit von etwa 50000 1/h bezogen auf den SCR-Katalysator.

In weiterer Ausgestaltung des Verfahrens ist eine Adaption eines für den Betrieb der Abgasreinigungsanlage vorgesehenen Kennfelds für eine durch das oxidationskatalytischwirksame Abgasreinigungsbauteil bewirkte Oxidation von NO zu NO₂ in Abhängigkeit vom ermittelten Alterungszustand vorgesehen. Kennfelder für die NO₂-Bildung werden typischerweise für eine Modellierung eines NOx-Umsatzes des SCR-Katalysator bzw. zur modellgestützten Dosierung des für einen NOx-Umsatz am SCR-Katalysator eingesetzten Reduktionsmittels eingesetzt. Falls ein Partikelfilter im Abgasstrang vorgesehen ist, wird dessen Ruß-Beladungszustand bevorzugt in Abhängigkeit von einer im Abgas vorhandenen NO₂-Konzentration modelliert. Darauf aufsetzend werden Zeitpunkte, bei denen eine thermische Zwangsregeneration durchzuführen ist, festgelegt. Durch eine Anpassung bzw. Adaption eines vorgesehenen Kennfelds oder einer Kennlinie betreffend die betriebszustandsabhängige NO₂-Bildung an die Alterung des oxidationskatalytisch wirksamen Abgasreinigungsbauteils können die genannten und gegebenenfalls weitere Betriebsgrößen optimal über die Betriebsdauer der Abgasreinigungsanlage festgelegt werden. Auf diese Weise werden eine durch die Alterung des oxidationskatalytisch wirksamen Abgasreinigungsbauteils verursachte übermäßige Verschlechterung die Reinigungswirkung der Abgasreinigungsanlage insgesamt sowie ein unerwünschter Kraftstoffmehrverbrauch infolge häufigerer Zwangsregenerationen des Partikelfilters vermieden.

Vorteilhafte Ausführungsformen der Erfindung sind in den Zeichnungen veranschaulicht und werden nachfolgend beschrieben. Dabei sind die vorstehend genannten und nachfolgend noch zu erläuternden Merkmale nicht nur in der jeweils angegebenen Merkmalskombination, sondern auch in anderen Kombinationen oder in Alleinstellung verwendbar, ohne den Rahmen der vorliegenden Erfindung zu verlassen.

Es zeigen:
- Fig. 1: ein schematisches Blockbild eines Kraftfahrzeug-Verbrennungsmotors mit einer angeschlossenen Abgasreinigungsanlage mit einem SCR-Katalysator und einem stromauf angeordneten oxidationskatalytisch wirksamen Abgasreinigungsbauteil,
- Fig. 2: ein Diagramm zur Erläuterung der Alterungsabhängigkeit des ausgangsseitig eines oxidationskatalytisch wirksamen Abgasreinigungsbauteils vorhandenen Konzentrationsverhältnisses von NO₂ und NOx im Abgas,
- Fig. 3: ein Diagramm zur Verdeutlichung einer typischerweise vorhandenen Abhängigkeit des NOx-Umsatzes eines SCR-Katalysators vom eingangsseitigen Konzentrationsverhältnis von NO₂ und NOx im Abgas,
- Fig. 4: ein Diagramm zur Verdeutlichung eines typischerweise ausgangsseitig eines oxidationskatalytisch wirksamen Abgasreinigungsbauteils vorhandenen Konzentrationsverhältnisses von NO₂ und NOx in Abhängigkeit vom HC-Gehalt eingangsseitig des oxidationskatalytisch wirksamen Abgasreinigungsbauteils mit unterschiedlichen Alterungszuständen,
- Fig. 5: ein Diagramm zur Verdeutlichung der für eine Abgasreinigungsanlage nach Fig. 1 typischerweise vorhandenen Abhängigkeit des NOx-Umsatzes des SCR-Katalysators vom HC-Gehalt stromauf eines vorgeschalteten oxidationskatalytisch wirksamen Abgasreinigungsbauteils und
- Fig. 6: eine schematisch dargestellte Alterungskennlinie, erhalten aus den in den Diagrammen gemäß Fig. 2 und Fig. 3 dargestellten Abhängigkeiten.

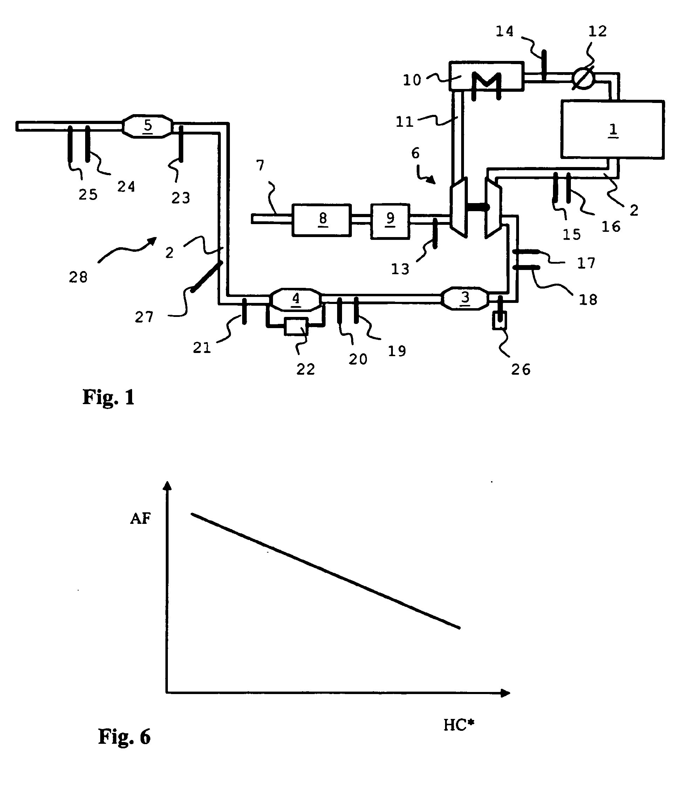

Fig. 1 zeigt beispielhaft ein schematisches Blockbild eines Verbrennungsmotors 1 eines nicht dargestellten Kraftfahrzeugs mit zugehöriger Abgasreinigungsanlage 28. Der Verbrennungsmotor 1 ist vorzugsweise als luftverdichtende Brennkraftmaschine, nachfolgend vereinfacht als Dieselmotor bezeichnet, ausgebildet. Das vom Dieselmotor 1 ausgestoßene, typischerweise mehr oder weniger stark sauerstoffhaltige Abgas wird von einer Abgasleitung 2 aufgenommen und durchströmt nacheinander einen Oxidationskatalysator 3, einen Partikelfilter 4 und einen NOx-Reduktionskatalysator 5. Dem NOx-Reduktionskatalysator 5 ist bevorzugt ein nicht dargestellter zweiter Oxidationskatalysator als so genannter Sperrkatalysator zur Oxidation von durch den NOx-Reduktionskatalysator 5 schlüpfendem Reduktionsmittel nachgeschaltet. Oxidationskatalysator 3 und Partikelfilter 4 können eng benachbart in einem gemeinsamen Gehäuse angeordnet sein. Bevorzugt ist eine Anordnung von Oxidationskatalysator 3, Partikelfilter 4, NOx-Reduktionskatalysator 5 und gegebenenfalls vorhandenem Sperrkatalysator in einem gemeinsamen Gehäuse, womit gleichzeitig ein Schalldämpfer gebildet ist. Der Partikelfilter 4 ist vorzugsweise mit einer einen Rußabbrand und/oder einer NO-Oxidation fördernder katalytischen Beschichtung versehen. Insofern stellen Oxidationskatalysator 3 und Partikelfilter 4 jeweils für sich oder auch als gemeinsame Baueinheit betrachtet, ein oxidationskatalytisch wirksames Abgasreinigungsbauteil im Sinne der Erfindung dar.

Zur Beheizung des Oxidationskatalysators 3 bzw. des Abgases kann wie dargestellt eine Heizeinrichtung 26 eingangsseitig des Oxidationskatalysators 3 in der Abgasleitung 2 angeordnet sein. Die Heizeinrichtung 26 kann als elektrisches Heizelement oder auch als ein Wärme liefernder Reformer oder Vorverbrenner ausgebildet sein. Eine Ausführung als Einspritzeinrichtung von Kraftstoff, der bei Oxidation am nachfolgenden Oxidationskatalysator 3 eine Abgasaufheizung bewirkt, ist ebenfalls möglich. Eine Aufheizung des Abgases kommt insbesondere bei einer erzwungenen Regeneration des Partikelfilters 4 durch Rußabbrand in Betracht. Zur Feststellung der Notwendigkeit einer solchen Regeneration ist dem Partikelfilter 4 ein Differenzdrucksensor 22 zugeordnet, welcher ein bezüglich einer Partikelbeladung auswertbares Signal liefert. Ferner ist ein Abgasturbolader 6 vorgesehen, dessen Turbine vom Abgasstrom angetrieben wird und dessen Verdichter über eine Ansaugluftleitung 7 angesaugte Luft über eine Luftzufuhrleitung 11 dem Dieselmotor 1 zuführt. Der Abgasturbolader 6 ist vorzugsweise als so genannter VTG-Lader mit einer variablen Einstellung seiner Turbinenschaufeln ausgebildet.

Zur Einstellung der dem Dieselmotor 1 zugeführten Luftmenge ist in der Luftzufuhrleitung 11 eine Drosselklappe 12 angeordnet. Zur Reinigung der Ansaugluft bzw. zur Messung der Ansaugluftmenge sind ein Luftfilter 8 bzw. ein Luftmassenmesser 9 in der Ansaugluftleitung 7 vorgesehen. Ein in der Luftzufuhrleitung angeordneter Ladeluftkühler 10 dient zur Kühlung der verdichteten Ansaugluft. Weiterhin ist eine nicht dargestellte, über ein Abgasrückführventil einstellbare Abgasrückführung vorgesehen, mit welcher eine vorgebbare Menge rückgeführten Abgases der Ansaugluft zugegeben werden kann.

Stromauf des NOx-Reduktionskatalysators 5 ist eine Zugabestelle mit einer Dosiereinheit 27 zur Zugabe eines Reduktionsmittels in das Abgas angeordnet. Die Versorgung der Dosiereinheit 27 mit dem Reduktionsmittel erfolgt aus einem hier nicht dargestellten Behälter. Nachfolgend wird davon ausgegangen, dass es sich bei dem Reduktionsmittel um wässrige Harnstofflösung handelt, die dem Abgas über die Dosiereinheit 27 dosiert zugegeben wird. Im heißen Abgas wird durch Thermolyse und/oder Hydrolyse NH₃ freigesetzt, welches selektiv bezüglich der Reduktion von im Abgas enthaltenen NOx wirkt. Dementsprechend ist vorliegend der NOx-Reduktionskatalysators 5 als klassischer SCR-Katalysator auf V₂O₅/WO₃-Basis oder als Zeolith-beschichteter, geträgerter SCR-Katalysator ausgebildet. Das erfindungsgemäße Verfahren ist jedoch auch bei Dosierung anderer Reduktionsmittel in freier oder gebundener Form mit Vorteil anwendbar.

Zur Steuerung des Betriebs der Abgasreinigungsanlage 28 sowie des Dieselmotors 1 ist eine in Fig. 1 nicht dargestellte Steuereinheit vorgesehen. Die Steuereinheit erhält Informationen über Betriebszustandsgrößen des Dieselmotors 1 und der Abgasreinigungsanlage 28. Informationen über Motorbetriebsgrößen können z.B. ein abgegebenes Drehmoment oder eine Drehzahl betreffen. Die Steuereinheit umfasst vorzugsweise eine Recheneinheit und eine Speichereinheit sowie eine Ein-Ausgabeeinheit. Dadurch ist die Steuereinheit in der Lage, komplexe Signalverarbeitungsvorgänge vorzunehmen und den Betrieb des Dieselmotors 1 sowie der Abgasreinigungsanlage 28 zu erfassen und zu steuern bzw. zu regeln. Hierfür notwendige Kennfelder sind vorzugsweise in der Speichereineinheit abgelegt, wobei auch eine adaptive Anpassung der Kennfelder vorgesehen sein kann. Die Kennfelder betreffen hauptsächlich die maßgeblichen Zustandsgrößen des Abgases, wie Massenstrom, Rohemission, Temperatur in Abhängigkeit der Betriebszustandsgrößen des Dieselmotors 1 wie Last, Drehzahl, Luftverhältniszahl etc. Ferner sind Kennfelder für die maßgeblichen Zustandsgrößen des Oxidationskatalysators 3, des Partikelfilters 4 und des SCR-Katalysators 5 vorgesehen.

Hinsichtlich des SCR-Katalysators 5 betreffen diese Kennfelder insbesondere den NOx-Umsatz bzw. den Wirkungsgrad in Bezug auf den NOx-Umsatz und die NH₃-Speicherfähigkeit in Abhängigkeit von den hierfür maßgebenden Einflussgrößen, insbesondere in Abhängigkeit vom Konzentrationsverhältnis von NO₂ und NOx im Abgas. Für den Oxidationskatalysator 3 sind Kennlinien oder Kennfelder betreffend die Temperatur- und Durchsatzabhängigkeit seines Umsatzvermögens bzw. seiner Anspringtemperatur, insbesondere in Abhängigkeit von seinem Alterungszustand vorgesehen. Für den Partikelfilter 4 sind Kennlinien und Kennfelder betreffend seine Partikelbeladung in Abhängigkeit vom Abgasdruck bzw. vom Druckverlust sowie Kennfelder betreffend die Oxidation von angesammelten Rußpartikeln durch im Abgas enthaltenes NO₂ vorgesehen.

Die Erfassung von Betriebszuständen des Dieselmotors 1 sowie der Abgasreinigungsanlage 28 und der zugeordneten Einheiten erfolgt vorzugsweise wenigstens teilweise mittels geeigneter Sensoren. Beispielhaft sind in Fig. 1 Drucksensoren 13 und 15 für einen Druck vor dem Verdichter und einen Druck vor der Turbine des Turboladers 6 sowie Temperatursensoren 14, 16, 18, 19, 21, 23 und 24 für jeweils eine Temperatur nach dem Ladeluftkühler 10, vor der Turbine, vor dem Oxidationskatalysator 3, vor und nach dem Partikelfilter 4 sowie vor und nach dem SCR-Katalysator 5 dargestellt. Weitere Sensoren, insbesondere zur Erfassung von Abgaskomponenten können ebenfalls vorgesehen sein. Beispielsweise sind ein Lambdasensor 17 sowie Sensoren 20 und 25 für den Stickoxid- und/oder NH₃-Gehalt im Abgas vorgesehen. Die Signale der Sensoren werden von der Steuereinheit verarbeitet, so dass die wesentlichen Zustandsgrößen jederzeit vorliegen und der Betriebspunkt des Dieselmotors 1 falls notwendig so verändert werden kann, dass ein optimaler Betrieb der Abgasreinigungsanlage 28 ermöglicht ist. Bevorzugt erfolgt eine rechnerische Modellierung des Verhaltens von Oxidationskatalysator 3, Partikelfilter 4 und SCR-Katalysator 5, welche auf die genannten Kennlinien und Kennfelder zurückgreift, wobei bevorzugt deren Adaption bei insbesondere alterungsbedingten Veränderungen vorgesehen ist. Dabei erfolgt ein laufendes Monitoring des Verhaltens mittels der vorgesehenen Sensoren.

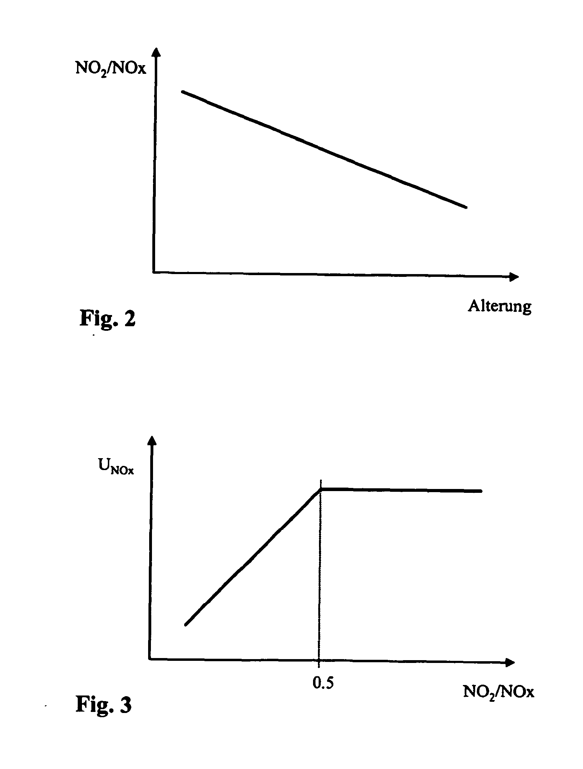

Zur Erläuterung der erfindungsgemäßen Vorgehensweise wird nachfolgend zunächst auf die Figuren 2 und 3 Bezug genommen.

Fig. 2 zeigt in einem Diagramm schematisch eine typischerweise gegebene Abhängigkeit eines ausgangsseitig des Partikelfilters 4 vorhandenen Konzentrationsverhältnisses von NO₂ und NOx im Abgas vom Alterungszustand des Oxidationskatalysators 3 und/oder der oxidationskatalytisch wirksamen Beschichtung des Partikelfilters 4. Dabei wird unter NOx wie üblich die Gesamtheit der Stickoxide NO und NO₂ verstanden. Wie ersichtlich, ergeben sich bei zunehmender Alterung abnehmende NO₂/NOx-Konzentrationsverhältnisse im Abgas. Dies ist auf ein alterungsbedingtes Nachlassen der Fähigkeit insbesondere des Oxidationskatalysators 3 zur Oxidation von im Abgas vorhandenem NO zurückzuführen. In diesem Zusammenhang ist anzumerken, dass vom Dieselmotor 1 emittiertes NOx zunächst nahezu vollständig als NO vorliegt. Die im Diagramm von Fig. 2 dargestellte Abhängigkeit ist typischerweise bei vergleichsweise niedrigen Abgastemperaturen im Bereich von 200 °C und 350 °C, insbesondere bei etwa 200 °C, und Abgasraumgeschwindigkeiten von etwa 50000 1/h oder mehr besonders stark ausgeprägt. Die Alterung ist bevorzugt in Form eines Alterungsfaktors gegeben oder auf andere Weise, beispielsweise durch Korrelation mit einer Anspringtemperatur zur CO- oder HC-Oxidation normiert.

Das im Abgas ausgangsseitig des Partikelfilters 4 und somit eingangsseitig des SCR-Katalysators 5 im Abgas vorhandene NO₂/NOx-Konzentrationsverhältnis im Abgas hat andererseits typischerweise Einfluss auf die NOx-Umsatzfähigkeit des SCR-Katalysators 5. Im Diagramm von Fig. 3 sind diese Verhältnisse schematisch dargestellt. Wie ersichtlich, nimmt der NOx-Umsatz ausgehend von niedrigen NO₂/NOx-Konzentrationsverhältnissen mit zunehmendem NO₂/NOx-Konzentrationsverhältnis zunächst zu und bleibt bei weiter zunehmendem NO₂/NOx-Konzentrationsverhältnis annähernd konstant und maximal. Dabei wird davon ausgegangen, dass der SCR-Katalysator 5 in Bezug auf die Reduktionsmittelzufuhr optimal und wenigstens annähernd schlupffrei betrieben wird. Charakteristischerweise kann ab einem NO₂/NOx-Konzentrationsverhältnis von etwa 0,5 mit zunehmendem NO₂-Anteil keine signifikante Erhöhung des NOx-Umsatzes mehr erzielt werden. Die im Diagramm von Fig. 3 dargestellte Abhängigkeit ist typischerweise bei vergleichsweise niedrigen Abgastemperaturen im Bereich von 180 °C und 350 °C, insbesondere bei etwa 200 °C, und Abgasraumgeschwindigkeiten von 50000 1/h oder mehr besonders stark ausgeprägt.

Aufgrund der erläuterten Verhältnisse wird zur Erzielung eines möglichst hohen NOx-Umsatzes ein NO₂/NOx-Konzentrationsverhältnis von etwa 0,5 beim Betrieb der Abgasreinigungsanlage 28 und insbesondere bei Temperaturen des SCR-Katalysators 5 von weniger als etwa 350 °C angestrebt. Bei einem deutlich höheren NO₂/NOx-Konzentrationsverhältnis besteht unter bestimmten Bedingungen die Gefahr eines unvollständigen Umsatzes von NO₂.

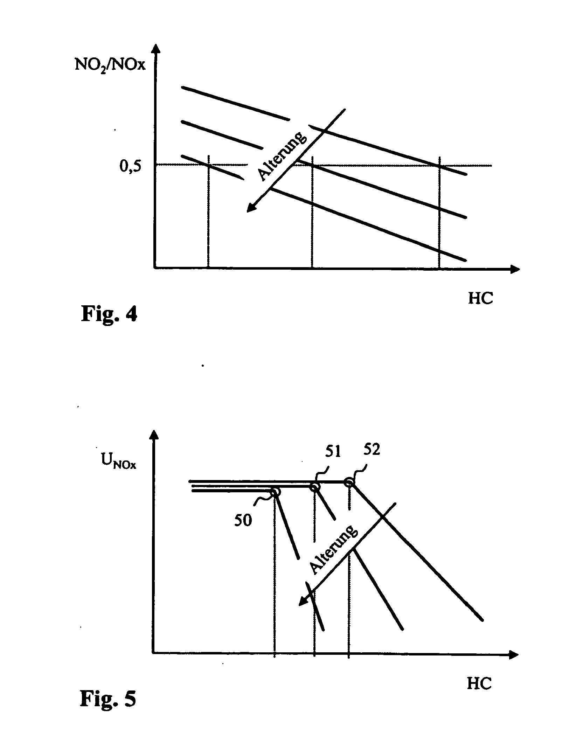

Die Fähigkeit der oxidationskatalytisch wirksamen Abgasreinigungsbauteile Oxidationskatalysator 3 und/oder Partikelfilter 4 zur Erhöhung des NO₂/NOx-Konzentrationsverhältnisses lässt jedoch nicht nur, wie im Diagramm von Fig. 2 veranschaulicht, mit zunehmender Alterung nach. Gleichfalls hemmend wirken HC-Bestandteile im Abgas, was anhand von Fig. 4 erläutert wird. Fig. 4 zeigt in einem Diagramm schematisch eine typischerweise gegebene Abhängigkeit eines ausgangsseitig des Partikelfilters 4 vorhandenen Konzentrationsverhältnisses von NO₂ und NOx im Abgas vom HC-Anteil im Abgas stromauf des Oxidationskatalysators 3 für verschiedene Alterungszustände des Oxidationskatalysators 3 und/oder der oxidationskatalytisch wirksamen Beschichtung des Partikelfilters 4. Wie ersichtlich, ergeben sich bei zunehmendem HC-Anteil abnehmende NO₂/NOx-Konzentrationsverhältnisse. Infolge der zusätzlich gegebenen Abhängigkeit vom Alterungszustand liegen die einer zunehmenden Alterung zugeordneten Kennlinien untereinander. Beispielsweise wird die Grenze eines NO₂/NOx-Konzentrationsverhältnisses von 0,5 bei einem stärker gealterten Oxidationskatalysator 3 bereits bei einem vergleichsweise niedrigen HC-Gehalt im Abgas erreicht. Demgegenüber ist wie dargestellt, die HC-Toleranz eines gering gealterten Oxidationskatalysators 3 entsprechend höher.

Unter Berücksichtigung der in Fig. 3 und 4 dargestellten Verhältnisse ergibt sich eine vom Alterungszustand des Oxidationskatalysators 3 bzw. der oxidationskatalytisch wirksamen Beschichtung des Partikelfilters 4 abhängige Korrelation von NOx-Umsatz des SCR-Katalysators 5 und einem stromauf des Oxidationskatalysator 3 im Abgas vorhandenen HC-Gehalt. Diese Verhältnisse sind schematisch im Diagramm von Fig. 5 dargestellt. Die entsprechenden Kennlinien zeigen als typischen Verlauf einen annähernd konstanten und maximalen NOx-Umsatz bei niedrigen HC-Anteilen des Abgases. Mit ansteigendem HC-Anteil wird typischerweise an einem von der Alterung des Oxidationskatalysators 3 und/oder der oxidationskatalytisch wirksamen Beschichtung des Partikelfilters 4 abhängigen Punkt 50, 51, 52 ein Absinken des NOx-Umsatzes bei ansonsten unveränderten Bedingungen festgestellt. Charakteristisch ist insbesondere bei vergleichsweise niedrigen Abgastemperaturen im Bereich von 180 °C und 350 °C und Abgasraumgeschwindigkeiten von etwa 50000 1/h oder mehr ein mehr oder weniger scharfes und beispielsweise mittels einer geeigneten NOx-Sensorik detektierbares Abknicken der Kennlinien.

Mittels zuvor empirisch ermittelter Vergleichskennlinien kann der Lage eines jeweiligen Knickpunkts 50, 51, 52 in Bezug auf den zugeordneten HC-Gehalt ein definierter Alterungszustand des Oxidationskatalysators 3 und/oder der oxidationskatalytisch wirksamen Beschichtung des Partikelfilters 4 zugeordnet werden. In Fig. 6 ist ein Diagramm mit einer entsprechenden Alterungskennlinie schematisch dargestellt. Die dargestellte Alterungskennlinie kennzeichnet die Abhängigkeit eines willkürlich definierten Alterungsfaktors AF vom an einem jeweiligen Knickpunkt 50, 51, 52 des NOx-Umsatzverlaufs gemäß Fig. 5 vorhandenen HC-Anteil HC* im Abgas eingangsseitig des Oxidationskatalysators 3.

Bei der praktischen Durchführung des oben in seinen prinzipiellen Schritten schematisch erläuterten Verfahrens wird bevorzugt eine Prüfroutine gestartet, in welcher vorzugsweise wie folgt vorgegangen wird. Bei normalem Betrieb des Dieselmotors 1 wird der SCR-Katalysator 5 mit Ammoniak bzw. Harnstofflösung vorzugsweise unter Rückgriff auf eine modellbasierten Steuerung bzw. Regelung derart versorgt, dass sich ein maximaler NOx-Umsatz bei gleichzeitiger Einhaltung eines vorgebbaren Grenzwerts für einen Ammoniakschlupf ergibt. Wird ein Betriebspunkt mit vorgebbaren Betriebsparametern festgestellt, so wird der HC-Gehalt des Abgases eingangsseitig des Oxidationskatalysators 3 schrittweise mit vorgebbarem zeitlichen Abstand um vorgebbare Mengen bis zu einer vorgebbaren Höchstmenge erhöht. Dies erfolgt bevorzugt durch Aktivierung einer späten Kraftstoffnacheinspritzung in die Brennräume des Dieselmotors 1 oder durch Aktivierung einer Einrichtung zur Sekundäreinspritzung von Kraftstoff in die Abgasleitung 2. Mittels des von der Steuereinheit ermittelbaren Abgasdurchsatzes wird der jeweilige HC-Anteil im Abgas ermittelt. Ein bevorzugter Betriebspunkt, bei welchem ein Start der Prüfroutine freigegeben bzw. initiiert wird, ist beispielsweise durch mittlere Abgas-Raumgeschwindigkeiten des Oxidationskatalysators 3 bzw. des SCR-Katalysators 5 von etwa 50000 1/h sowie einer Temperatur von etwa 250 °C bzw. etwa 200 °C des Oxidationskatalysators 3 und/oder des Partikelfilter 4 bzw. des SCR-Katalysators 5 gekennzeichnet,

Für jeden wie geschildert definiert eingestellten HC-Anteil im Abgas eingangsseitig des Oxidationskatalysators 3 wird ein zugeordneter NOx-Umsatz des SCR-Katalysators 5 ermittelt. Bevorzugt wird hierfür das Signal des Stickoxidsensors 25 und ein messtechnisch gewonnener oder anhand von Kennlinien gegebener Stickoxidgehalt stromauf des SCR-Katalysators 5 von der Steuereinheit ausgewertet. HC-Anteile und zugeordnete NOx-Umsätze werden wie oben anhand des Diagramms von Fig. 5 erläutert, in eine Kennlinie übertragen und abgespeichert. Nach Aufnahme der Kennlinie wird die Prüfroutine beendet und zu einem normalen Motorbetrieb ohne Nacheinspritzung oder Sekundäreinspritzung zurückgekehrt.

Die ermittelte Kennlinie für den NOx-Umsatz in Abhängigkeit des eingestellten HC-Anteils wird in Bezug auf einen ein Unterschreiten eines vorgebbaren NOx-Umsatzes zugeordneten HC-Anteil ausgewertet. Bevorzugt wird ein Kennwert HC* ermittelt, der den größten eingestellten HC-Anteil des Abgases angibt, bei welchem der festgestellte NOx-Höchstumsatz um ein vorgebbares (geringes) Maß unterschritten ist. Eine vorteilhafte alternative oder zusätzlich Auswertungsroutine umfasst eine rechnerische Ableitung der Kennlinie, d.h. die Ermittlung der Kennliniensteigung. Dabei tritt ein abknickendes Verhalten einer Kennlinie gemäß Fig. 5 durch einen Sprung deutlicher in Erscheinung, was die Auswertungszuverlässigkeit und -Genauigkeit verbessert. Als Kennwert HC* wird in diesem Fall ein Unterschreiten eines vorgebbaren Werts für die Kennliniensteigung bzw. das Auftreten eines Sprungs definiert.

Ist ein gegebenenfalls hinsichtlich einer statistischen Sicherheit überprüfter Kennwert HC* ermittelt, wird diesem ein Alterungszustand des Oxidationskatalysator 3 und/oder der oxidationskatalytisch wirksamen Beschichtung des Partikelfilters 4 in Form eines Alterungsfaktors AF zugeordnet. Hierzu erfolgt bevorzugt ein Vergleich mit einer vorab abgespeicherten Kennlinie gemäß Fig. 6.

Durch wiederholt im Laufe der Betriebsdauer des Fahrzeugs durchgeführte Prüfroutinen der geschilderten Art ist eine Erfassung eines zeitlichen Alterungsverlauf ermöglicht. Es ist vorgesehen, in Abhängigkeit einer festgestellter Alterung oder eines festgestellten Alterungsverlaufs gegebenenfalls Eingriffe in den Betrieb des Dieselmotors 1 bzw. der Abgasreinigungsanlage 28 vorzunehmen und diesen an den Alterungszustand anzupassen.

Vorgesehen ist beispielsweise eine Adaption eines für den Betrieb der Abgasreinigungsanlage 28 abgespeicherten Kennfelds für eine durch das jeweilige oxidationskatalytisch wirksame Abgasreinigungsbauteil bewirkte Oxidation von NO zu NO₂ in Abhängigkeit vom ermittelten Alterungszustand. Dies ermöglicht wiederum eine Anpassung einer Dosierung von Reduktionsmittel zur NOx-Verminderung am SCR-Katalysator 5 hinsichtlich Menge und unterer Freigabetemperatur an die alterungsbedingt geänderte Bereitstellung von NO₂. Weiterhin ist es vorgesehen, eine alterungsbedingt verminderte Menge von bereitgestelltem NO₂ in ein Umsatzmodell für den NOx-Umsatz des SCR-Katalysators 5 und/oder in ein Rußbeladungsmodell des Partikelfilters 4 einfließen zu lassen. Dadurch kann eine gegebenenfalls notwendige Verkürzung von Zeitintervallen für erzwungene Partikelfilterregenerationen optimal festgelegt werden. Gleichfalls vorgesehen ist es, eine aufgrund einer festgestellten Alterung verminderte Anspringtemperatur zur Oxidation von Kraftstoff bzw. HC bei einer Festelegung einer Freigabetemperatur für eine HC- bzw. Kraftstoffsekundärzugabe für eine erzwungene Partikelfilterregeneration anzupassen.

## Patentansprüche

1. Verfahren zum Betreiben einer Abgasreinigungsanlage einer Kraftfahrzeug-Brennkraftmaschine (1), in deren Abgasstrang (2) ein oxidationskatalytisch wirksames Abgasreinigungsbauteil (3) stromauf eines SCR-Katalysators (5) angeordnet ist, wobei ein Alterungszustand des oxidationskatalytisch wirksamen Abgasreinigungsbauteils (3) durch Korrelation eines stromauf des oxidationskatalytisch wirksamen Abgasreinigungsbauteils (3) im Abgas vorhandenen Kohlenwasserstoffanteils mit einem gleichzeitig vorhandenen Stickoxidumsatz des SCR-Katalysators (5) ermittelt wird.

2. Verfahren nach Anspruch 1,
**dadurch gekennzeichnet, dass**
unterschiedliche Kohlenwasserstoffanteile im Abgas stromauf des oxidationskatalytisch wirksamen Abgasreinigungsbauteils (3) eingestellt werden und ein einem Unterschreiten eines vorgebbaren Stickoxidumsatzes zugeordneter Kohlenwasserstoffanteil als Grundlage für die Ermittlung des Alterungszustands herangezogen wird.

3. Verfahren nach Anspruch 2,
**dadurch gekennzeichnet, dass**
die Einstellung unterschiedlicher Kohlenwasserstoffanteile im Abgas bei einem Betriebspunkt mit einer Temperatur des oxidationskatalytisch wirksamen Abgasreinigungsbauteils (3) erfolgt, bei dem eine vom oxidationskatalytisch wirksamen Abgasreinigungsbauteil (3) im Frischzustand katalysierte Oxidation von Stickstoffmonoxid zu Stickstoffdioxid zumindest annähernd maximal ist.

4. Verfahren nach Anspruch 2 oder 3,
**dadurch gekennzeichnet, dass**
die Einstellung unterschiedlicher Kohlenwasserstoffanteile im Abgas bei einem Betriebspunkt mit einer Temperatur des SCR-Katalysators im Bereich zwischen 180 °C und 350 °C erfolgt.

5. Verfahren nach einem der Ansprüche 1 bis 4,
**dadurch gekennzeichnet, dass**
eine Adaption eines für den Betrieb der Abgasreinigungsanlage (28) vorgesehenen Kennfelds für eine durch das oxidationskatalytisch wirksame Abgasreinigungsbauteil (3) bewirkte Oxidation von Stickstoffmonoxid zu Stickstoffdioxid in Abhängigkeit vom ermittelten Alterungszustand vorgesehen ist.

6. Verfahren nach Anspruch 5,
**dadurch gekennzeichnet, dass**
eine Modellierung des Stickoxidumsatzes des SCR-Katalysators (5) vorgenommen wird, bei welcher auf das Kennfeld für die durch das oxidationskatalytisch wirksame Abgasreinigungsbauteil (3) bewirkte Oxidation von Stickstoffmonoxid zu Stickstoffdioxid zurückgegriffen wird.

7. Verfahren nach Anspruch 5 oder 6,
**dadurch gekennzeichnet, dass**
bei einer Festlegung von Zeitpunkten für eine thermische Zwangsregeneration eines im Abgasstrang (2) angeordneten Partikelfilters (4) auf das Kennfeld für die durch das oxidationskatalytisch wirksame Abgasreinigungsbauteil (3) bewirkte Oxidation von Stickstoffmonoxid zu Stickstoffdioxid zurückgegriffen wird.

## Claims

1. Method for operating an exhaust emission control system of an internal combustion engine (1) of a motor vehicle, in the exhaust train (2) of which system is provided an exhaust emission control component (3) acting as an oxidation catalyst upstream of an SCR catalyst (5), wherein an ageing state of the exhaust emission control component (3) acting as an oxidation catalyst is determined by correlating a hydrocarbon component present in the exhaust gas upstream of the exhaust emission control component (3) acting as an oxidation catalyst with a simultaneously occurring nitrogen oxide conversion of the SCR catalyst (5).

2. Method according to claim 1,
**characterised in that**
different hydrocarbon component are set in the exhaust gas upstream of the exhaust emission control component (3) acting as an oxidation catalyst and a hydrocarbon component assigned to a falling below a presettable nitrogen oxide conversion is used as a basis for the determination of the ageing state.

3. Method according to claim 2,
**characterised in that**
the different hydrocarbon components are set in the exhaust gas at an operating point with a temperature of the exhaust emission control component (3) acting as an oxidation catalyst, at which operating point an oxidation from nitrogen monoxide to nitrogen dioxide catalysed by the exhaust emission control component (3) acting as an oxidation catalyst in the fresh state is at least approximately maximal.

4. Method according to claim 2 or 3,
**characterised in that**
the different hydrocarbon components are set in the exhaust gas at an operating point with a temperature of the SCR catalyst in the range between 180°C and 350°C.

5. Method according to any of claims 1 to 4,
**characterised in that**
an adaptation of a characteristic map for the operation of the exhaust emission control system (28) is provided for an oxidation of nitrogen monoxide to nitrogen dioxide effected by the exhaust emission control component (3) acting as an oxidation catalyst as a function of the detected ageing state.

6. Method according to claim 5,
**characterised in that**
a modelling of the nitrogen oxide conversion of the SCR catalyst (5) is performed, wherein reference is made to the characteristic map for the oxidation of nitrogen monoxide to nitrogen dioxide effected by the exhaust emission control component (3) acting as an oxidation catalyst.

7. Method according to claim 5 or 6,
**characterised in that**
when determining points in time for a thermal forced regeneration of a particulate filter (4) provided in the exhaust train (2), reference is made to the characteristic map for the oxidation of nitrogen monoxide to nitrogen dioxide effected by the exhaust emission control component (3) acting as an oxidation catalyst.

## Revendications

1. Procédé d'utilisation d'un dispositif de traitement des gaz d'échappement d'un moteur à combustion interne (1) d'un véhicule, dont la ligne d'échappement (2) contient un composant de traitement (3) des gaz d'échappement à activité catalytique d'oxydation, disposé en amont d'un catalyseur à réduction catalytique sélective (5), un état de vieillissement du composant de traitement des gaz d'échappement (3) à activité catalytique d'oxydation étant déterminé par corrélation d'une fraction d'hydrocarbures présente dans les gaz d'échappement en amont du composant de traitement des gaz d'échappement (3) à activité catalytique d'oxydation, avec une transformation d'oxyde d'azote simultanée du catalyseur à réduction catalytique sélective (5).

2. Procédé selon la revendication 1, **caractérisé en ce que** différentes fractions d'hydrocarbures sont réglées dans les gaz d'échappement en amont du composant de traitement des gaz d'échappement (3) à activité catalytique d'oxydation et une fraction d'hydrocarbure associée à une limite inférieure d'une transformation d'oxyde d'azote prédéfinie sert de base pour déterminer l'état de vieillissement.

3. Procédé selon la revendication 2, **caractérisé en ce que** le réglage des différentes fractions d'hydrocarbures dans les gaz d'échappement s'effectue à un point de fonctionnement avec une température du composant de traitement des gaz d'échappement (3) à activité catalytique d'oxydation lorsqu'une oxydation de monoxyde d'azote en dioxyde d'azote catalysée à l'état frais par le composant de traitement des gaz d'échappement (3) à activité catalytique d'oxydation est au moins approximativement maximale.

4. Procédé selon les revendications 2 ou 3, **caractérisé en ce que** le réglage des différentes fractions d'hydrocarbure dans les gaz d'échappement s'effectue à un point de fonctionnement lorsque la température du catalyseur à réduction catalytique sélective se situe dans la plage entre 180°C et 350°C.

5. Procédé selon l'une quelconque des revendications de 1 à 4, **caractérisé en ce qu'**une adaptation d'un diagramme caractéristique prévu pour le fonctionnement du dispositif de traitement des gaz d'échappement (28) destiné à une oxydation du monoxyde d'azote en dioxyde d'azote obtenue par le composant de traitement de gaz d'échappement (3) à activité catalytique d'oxydation est prévue en fonction de l'état de vieillissement déterminé.

6. Procédé selon la revendication 5, **caractérisé en ce qu'**une modélisation de la transformation d'oxyde d'azote du catalyseur à réduction catalytique sélective (5) est réalisée pour laquelle on recourt au diagramme caractéristique pour l'oxydation du monoxyde d'azote en dioxyde d'azote obtenue par le composant de traitement de gaz d'échappement (3) à activité catalytique d'oxydation.

7. Procédé selon les revendications 5 ou 6, **caractérisé en ce qu'**on recourt au diagramme caractéristique pour l'oxydation du monoxyde d'azote en dioxyde d'azote obtenue par le composant de traitement de gaz d'échappement (3) à activité catalytique d'oxydation lors de la détermination des moments de régénération forcée thermique d'un filtre à particules (4) disposé dans la ligne d'échappement (2).
